# EUROPEAN PATENT APPLICATION

(11) **EP 4 524 176 A1**
(43) Date of publication of application: **19.03.2025**
(21) Application number: 24738761.6
(22) Date of filing: 05.01.2024
(51) Int. Cl.: C08G 63/91, C08G 63/08, C08L 67/04, C08L 33/06

(54) **BRANCHED POLYLACTIC ACID POLYMER AND METHOD FOR PREPARING SAME**

(30) Priority: 05.01.2023 KR 20230001715
(71) Applicant: LG Chem, Ltd., Yeongdeungpo-gu Seoul 07336 (KR)
(72) Inventor: PARK, Sung Eun, Daejeon 34122 (KR); YOO, Ki Hyun, Daejeon 34122 (KR); OH, Wan Kyu, Daejeon 34122 (KR); PARK, Si Jung, Daejeon 34122 (KR); WOO, Won Hee, Daejeon 34122 (KR)
(74) Representative: Goddar, Heinz J.
(86) International application number: PCT/KR2024/000283
(87) International publication number: WO 2024/147693

(57) **Abstract**

The present invention relates to a branched polylactic acid polymer which is branched and has improved rheological properties, and a method for preparing the same, and provides a branched polylactic acid polymer including a derived unit from a polylactic acid polymer, having an average number of long chain branches per molecule of 3 to 10, and having a mass flow rate measured under 190°C and 2.16 kg load based on ASTM D1238 conditions of 1 g/10 min to 20 g/10 min, and a method for preparing the same.

## Description

### TECHNICAL FIELD

### [Cross-reference to Related Applications]

The present application claims the benefit of priority based on Korean Patent Application No. 10-2023-0001715, filed on January 5, 2023, the entire contents of which are incorporated herein by reference.

### [Technical Field]

The present invention relates to a branched polylactic acid polymer which is branched and has improved rheological properties, and a method for preparing the same.

### BACKGROUND ART

Polylactic acid polymer (hereinafter, referred to as "PLA") is a biodegradable and eco-friendly material, and much research is being conducted recently to develop its uses. Unless modified, PLA is a generally linear molecule that behaves like a thermoplastic polymer and is useful as a material for a variety of films, fibers and other molded products.

However, PLA is brittle and has low rheological properties including melt strength, high thermal and mechanical properties due to low crystallinity are unsuitable for use, and there are large restrictions in a blow molding process and an injection molding process due to low rheological properties.

In order to solve the problem, technologies have been attempted to blend or copolymerize polybutylene succinate and polybutylene adipate terephthalate, which are biodegradable resins similar to PLA, with resins such as PP and PE, which have high heat resistance. However, there are problems with compatibility between the resins and insignificant effects achieved through blending or copolymerization.

As another embodiment, a thermoplastic polymer is required to have a low shear viscosity to form a melt that can be easily processed, and at the same time, the melt is required to have sufficient strength and/or dimensional stability to maintain the desired shape once formed. Generally, melt strength may be increased by increasing the molecular weight of a polymer, but the increase of the molecular weight also increases the shear viscosity, making the processing difficult. Accordingly, in order to improve the melt strength and processability of PLA together, a technology was tried to modify the linear structure of PLA and modify its properties by introducing a long-chain branch (LCB) into PLA using a chain extender or a branching agent. The chain extender and branching agent include isocyanate-based compounds such as methylene diphenyl diisocyanate and hexamethylene diisocyanate, epoxy-based compounds such as polyfunctional epoxy-based styrene acrylic oligomer, and anhydride-based compounds such as pyromellitic acid dianhydride.

In addition, KR10-2007-0049140A (2007. 05. 10) discloses a polylactide resin containing a long-chain branch obtained by reacting a polylactide resin with an acrylate polymer or copolymer including an epoxide group, and a method for preparing the same. However, there is a problem in that the viscosity of the polylactide resin prepared by the reaction of the acrylate polymer or copolymer increases significantly, causing difficulties in control in a molding process, which narrows the industrial application field of the polylactide resin to a very limited extent.

Therefore, there is a need for the development of PLA with improved melt strength, while maintaining the high reactivity of the epoxide group, and improved rheological properties by appropriately increasing viscosity, and a method for preparing the same.

### [Prior Art Document]

[Patent Document] (Patent Document 1) 10-2017-0049140 A (2007. 05. 10.)

### DISCLOSURE OF THE INVENTION

### TECHNICAL PROBLEM

The present invention is made to solve the problems of the prior art, and an object is to provide a branched polylactic acid polymer with excellent melt strength and rheological properties.

In addition, another object of the present invention is to provide a method for preparing the branched polylactic acid polymer.

### TECHNICAL SOLUTION

To solve the above-described task, the present invention provides a branched polylactic acid polymer and a method for preparing a branched polylactic acid polymer.
(1) The present invention provides a branched polylactic acid polymer comprising a derived unit from a polylactic acid polymer, wherein an average number of long chain branches per molecule is 3 to 10, and a mass flow rate measured under 190°C and 2.16 kg load based on ASTM D1238 conditions is 1 g/10 min to 20 g/10 min.
(2) The present invention provides the branched polylactic acid polymer according to (1), wherein a derived unit from an epoxy group-containing acrylate copolymer is further comprised, and the epoxy group-containing acrylate copolymer comprises 30 wt% to 50 wt% of a repeating unit derived from a first alkyl (meth)acrylate monomer, 30 wt% to 60 wt% of a repeating unit derived from a glycidyl (meth)acrylate monomer, and 10 wt% to 20 wt% of a repeating unit derived from a second alkyl (meth)acrylate monomer, where the first alkyl (meth)acrylate monomer and the second alkyl (meth)acrylate monomer are different from each other.
(3) The present invention provides the branched polylactic acid polymer according to (2), wherein the derived unit from an epoxy group-containing acrylate copolymer is comprised in 0.5 parts by weight to 1.0 part by weight on the basis of 100 parts by weight of the derived unit from a polylactic acid polymer.
(4) The present invention provides the branched polylactic acid polymer according to (2) or (3), wherein the epoxy group-containing acrylate copolymer has the number of epoxy groups per molecule of 30 to 80.
(5) The present invention provides the branched polylactic acid polymer according to any one of (2) to (4), wherein the first alkyl (meth)acrylate monomer and the second alkyl (meth)acrylate monomer are each independently at least one or more selected from the group consisting of methyl (meth)acrylate, butyl acrylate and 2-(ethylhexyl)acrylate, and the first alkyl (meth)acrylate monomer and the second alkyl (meth)acrylate monomer are different from each other.
(6) The present invention provides the branched polylactic acid polymer according to any one of (1) to (5), wherein the polylactic acid polymer has a weight average molecular weight measured by gel permeation chromatography using a polystyrene standard of 30,000 g/mol to 250,000 g/mol.
(7) The present invention provides the branched polylactic acid polymer according to any one of (1) to (6), wherein an absolute weight average molecular weight is 100,000 g/mol to 1,500,000 g/mol, and a poly dispersity index is 2.0 to 3.5, when measured by multi-angle light scattering-gel permeation chromatography.
(8) The present invention provides the branched polylactic acid polymer according to any one of (1) to (7), wherein the branched polylactic acid polymer has two peak tops on a differential molecular weight distribution graph obtained from measurement by gel permeation chromatography using a polystyrene standard, where a horizontal axis is a logarithmic molecular weight [log(M)], and a vertical axis is dw/dlog(M), which is the differential of a concentration fraction w by the logarithmic molecular weight, a first peak top (Pt₁) is 0.8 to 1.2, and a second peak top (Pt₂) is 0.1 to 0.6.
(9) The present invention provides the branched polylactic acid polymer according to any one of (1) to (8), wherein the branched polylactic acid polymer has two peak tops on a differential molecular weight distribution graph obtained from measurement by gel permeation chromatography using a polystyrene standard, where a horizontal axis is a logarithmic molecular weight [log(M)], and a vertical axis is dw/dlog(M), which is the differential of a concentration fraction w by the logarithmic molecular weight, a first peak top (Pt₁) is present in 4.5≤log(M)≤5.8, and a second peak top (Pt₂) is present in 5.8<log(M)≤6.5.
(10) The present invention provides the branched polylactic acid polymer according to any one of (1) to (9), wherein a slope on a graph of a complex viscosity (Pa.s) in accordance with an angular frequency (rad/s) is -0.1 to -0.6 at 180°C.
(11) The present invention provides a method for preparing a branched polylactic acid polymer, comprising a step of mixing a polylactic acid polymer and an epoxy group-containing acrylate copolymer, while heating in a temperature range of 180°C to 200°C, wherein the epoxy group-containing acrylate copolymer is prepared by polymerizing 30 wt% to 50 wt% of a repeating unit derived from a first alkyl (meth)acrylate monomer, 30 wt% to 60 wt% of a repeating unit derived from a glycidyl (meth)acrylate monomer, and 10 wt% to 20 wt% of a repeating unit derived from a second alkyl (meth)acrylate monomer, in the presence of an emulsifier in a solvent, and the first alkyl (meth)acrylate monomer and the second alkyl (meth)acrylate monomer are different from each other.
(12) The present invention provides the method for preparing a branched polylactic acid polymer according to (11), wherein the epoxy group-containing acrylate copolymer is used in 0.5 parts by weight to 1.0 part by weight on the basis of 100 parts by weight of the polylactic acid polymer.
(13) The present invention provides the method for preparing a branched polylactic acid polymer according to (11) or (12), wherein the epoxy group-containing acrylate copolymer has the number of epoxy groups per molecule of 30 to 80.

### EFFECTS OF THE INVENTION

The branched polylactic acid polymer according to the present invention has a modified linear structure and has effects of excellent melt strength and elasticity.

### BRIEF DESCRIPTION OF DRAWINGS

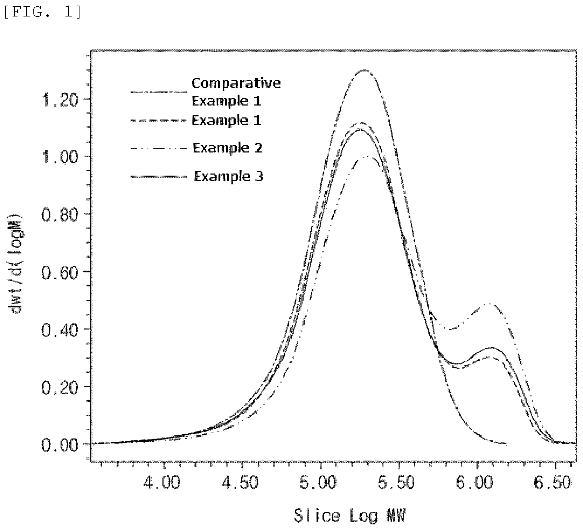

FIG. 1 is a graph of differential molecular weight distribution of each branched or unbranched polylactic acid polymer of the Examples of the present invention and the Comparative Example.

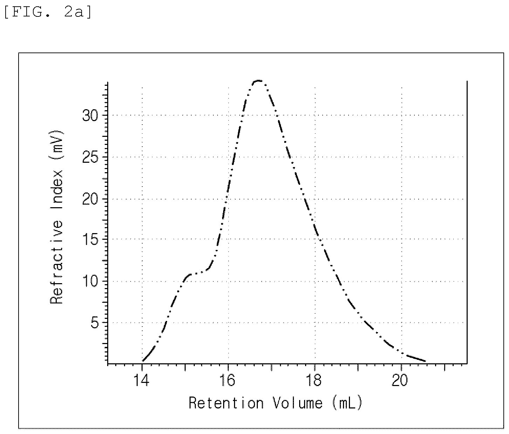

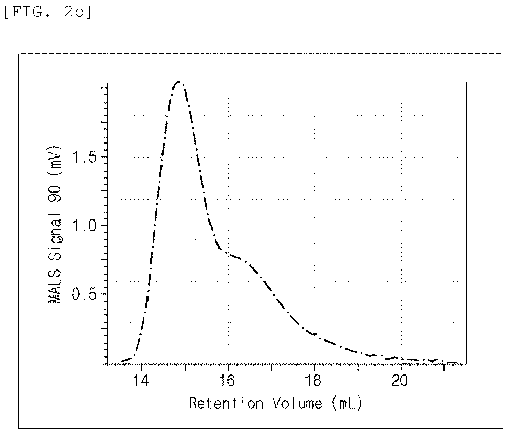

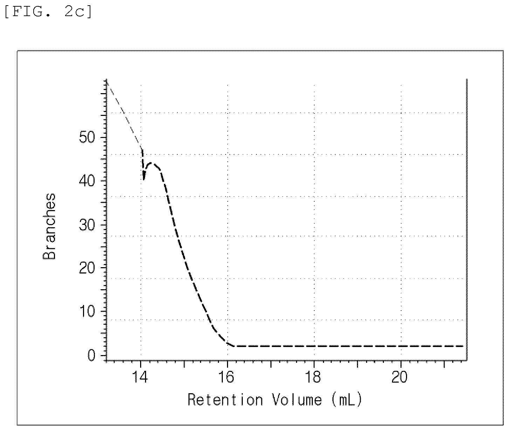

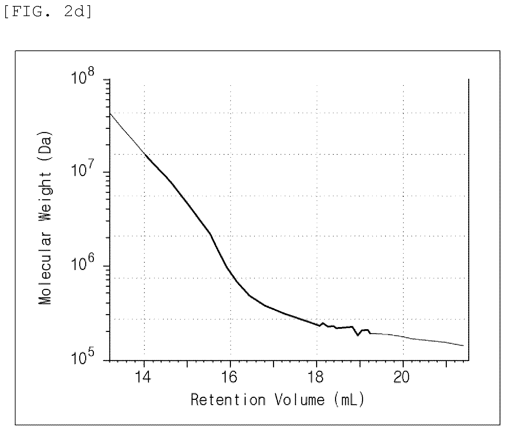

FIG. 2a to FIG. 2d are multi-angle light scattering-gel permeation chromatography analysis graphs of the branched polylactic acid polymer of Example 1 of the present invention, where FIG. 2a is a refractive index curve in accordance with a retention volume, FIG. 2b is a MALS signal (MALS intensity, 90° scattering angle) curve in accordance with a retention volume, FIG. 2c is a long chain branching (branches, branching index) curve in accordance with a retention volume, and FIG. 2d is a weight average molecular weight curve in accordance with a retention volume.

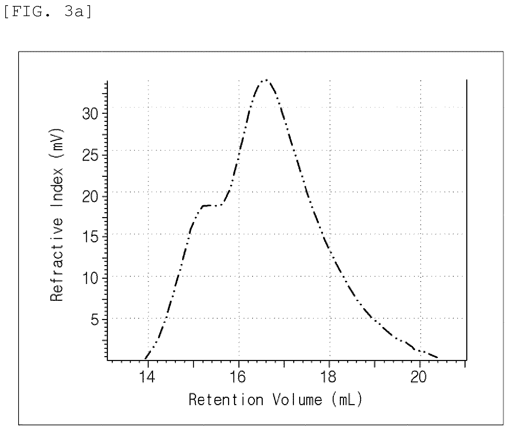

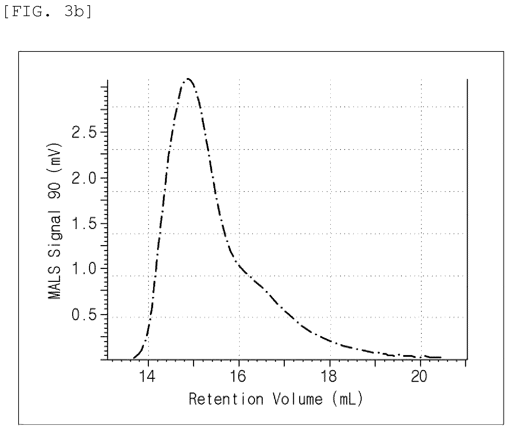

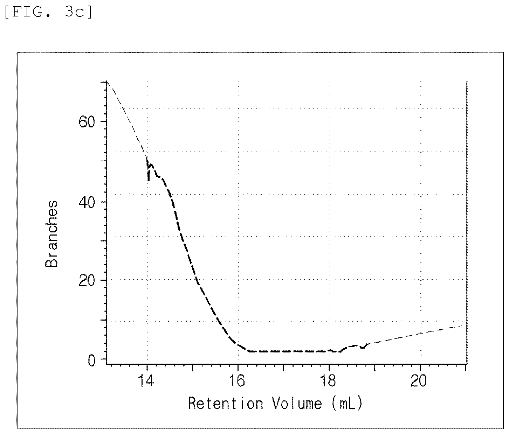

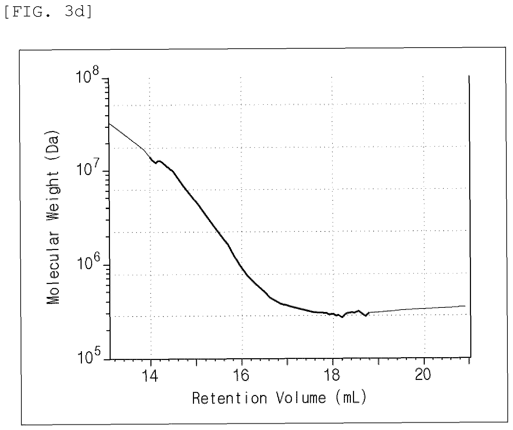

FIG. 3a to FIG. 3d are multi-angle light scattering-gel permeation chromatography analysis graphs of the branched polylactic acid polymer of Example 2 of the present invention, where FIG. 3a is a refractive index curve in accordance with a retention volume, FIG. 3b is a MALS signal (MALS intensity, 90° scattering angle) curve in accordance with a retention volume, FIG. 3c is a long chain branching (branches, branching index) curve in accordance with a retention volume, and FIG. 3d is a weight average molecular weight curve in accordance with a retention volume.

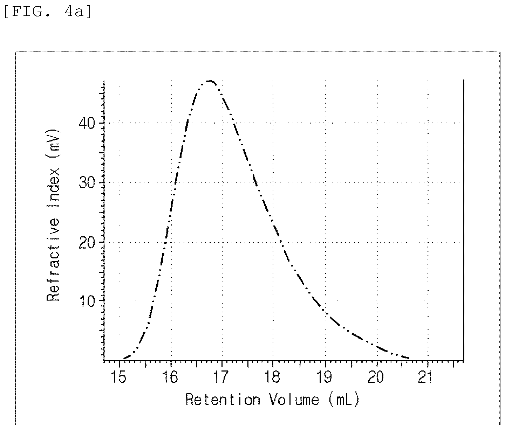

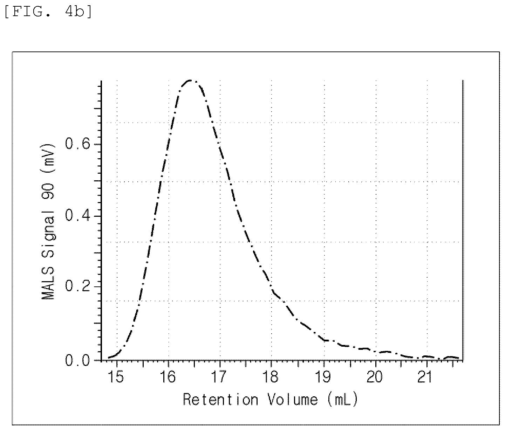

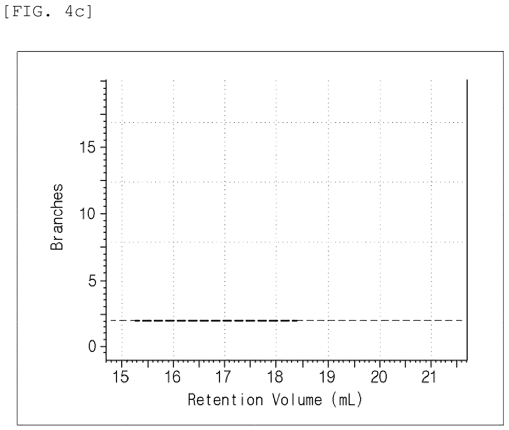

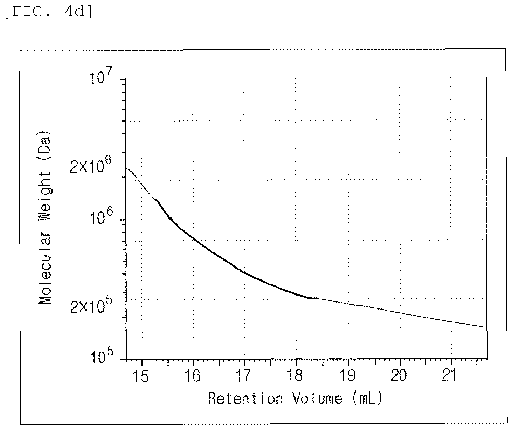

FIG. 4a to FIG. 4d are multi-angle light scattering-gel permeation chromatography analysis graphs of the unbranched polylactic acid polymer of Comparative Example 1 of the present invention, where FIG. 4a is a refractive index curve in accordance with a retention volume, FIG. 4b is a MALS signal (MALS intensity, 90° scattering angle) curve in accordance with a retention volume, FIG. 4c is a long chain branching (branches, branching index) curve in accordance with a retention volume, and FIG. 4d is a weight average molecular weight curve in accordance with a retention volume.

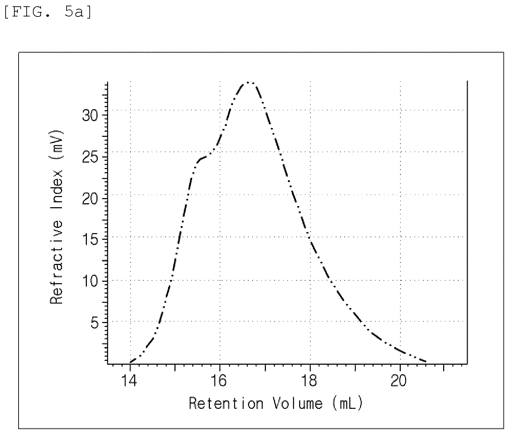

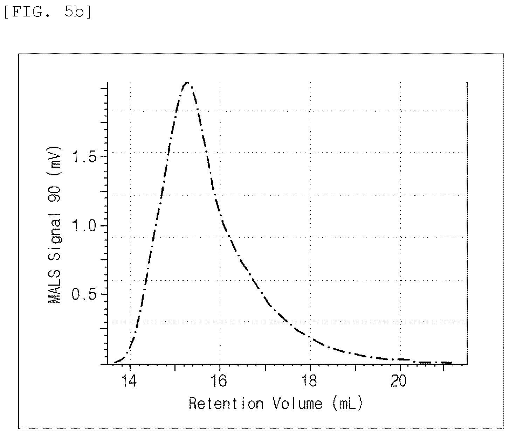

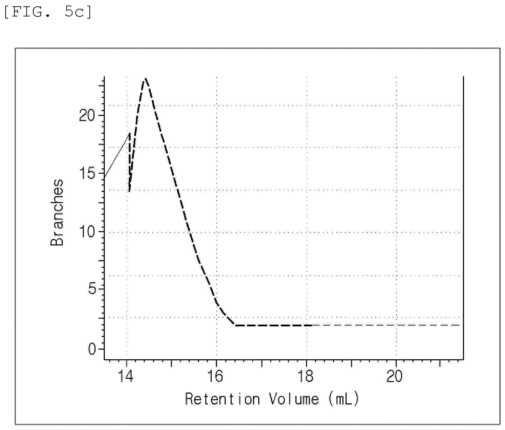

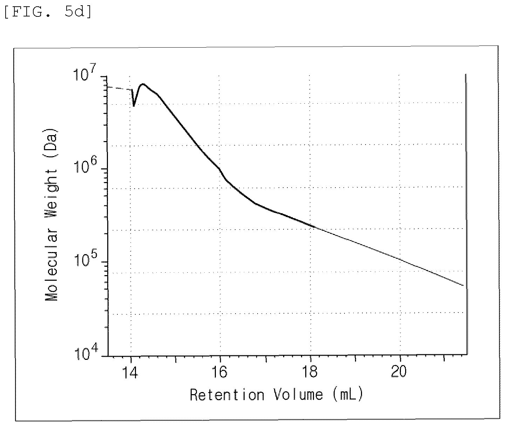

FIG. 5a to FIG. 5d are multi-angle light scattering-gel permeation chromatography analysis graphs of the branched polylactic acid polymer of Comparative Example 2 of the present invention, where FIG. 5a is a refractive index curve in accordance with a retention volume, FIG. 5b is a MALS signal (MALS intensity, 90° scattering angle) curve in accordance with a retention volume, FIG. 5c is a long chain branching (branches, branching index) curve in accordance with a retention volume, and FIG. 5d is a weight average molecular weight curve in accordance with a retention volume.

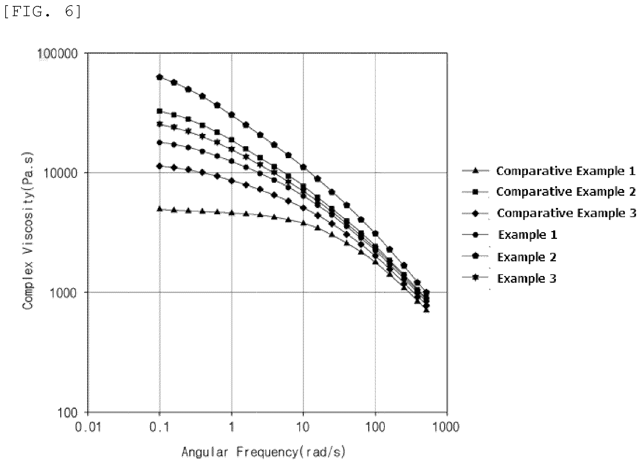

FIG. 6 is a graph of a complex viscosity (Pa.S) in accordance with an angular frequency (rad/s) at 180°C for each branched or unbranched polylactic acid polymer of the Examples of the present invention and Comparative Examples.

### BEST MODE FOR CARRYING OUT THE INVENTION

Hereinafter, the present invention will be described in more detail in order to assist the understanding of the present invention.

It will be understood that words or terms used in the description and claims of the present invention shall not be interpreted as the meaning defined in commonly used dictionaries. It will be further understood that the words or terms should be interpreted as having a meaning that is consistent with their meaning of the technical idea of the invention, based on the principle that an inventor may properly define the meaning of the words or terms to best explain the invention.

### Definition of Terms

In the present description, the term "long chain branching (LCB)" means a long chain in which the number of carbon atoms in a branch is similar to that of a skeleton chain to the extent that it is indistinguishable from the skeleton chain.

In the present description, the terms "derived unit and derived repeating unit" may mean a component, a unit or a structure comes from a certain material, or the material itself.

In the present description, the term "peak top" means the maximum dw/dlog(M) value on a differential molecular weight distribution graph obtained by gel permeation chromatography measurement using a polystyrene standard, where the horizontal axis is a logarithmic molecular weight [log(M)] and the vertical axis is dw/dlog(M), which is a concentration fraction W differentiated by the logarithmic molecular weight. In addition, in the differential molecular weight distribution graph, if the graph is unimodal, there is one peak top, and if the graph is multimodal, there are multiple peak tops.

In the present description, the term "poly dispersity index (PDI)" is weight average molecular weight (Mw)/number average molecular weight (Mn), and the weight average molecular weight and the number average molecular weight may be measured by gel permeation chromatography (GPC) provided with a differential refractive index detector (RI).

### Measurement Methods

In the present description, analysis on the long chain branching was conducted by multi-angle light scattering-gel permeation chromatography (MALS-GPC) using a Viscotek VE2001 GPC/SEC system provided with a Viscotek TDA 305 triple detector array module (light scattering, viscometer, and refractive index detector) under the conditions below, and all result data were calculated using OmniSEC version 4.7 software.
Column: two columns of Plgel mixed-B (Agilent Co.)
Solvent: tetrahydrofuran (THF)
Flow rate: 1.0 ml/min
Column temperature: 40°C
Specimen: 3.0 mg/1.0 ml THF
Standard material: polystyrene

In the present description, a relative weight average molecular weight and a differential molecular weight distribution graph were measured by gel permeation chromatography (GPC) provided with a differential refractive index detector (RI), and gel permeation chromatography was measured under the conditions below.
Column: two columns of PLgel Olexis (Polymer Laboratories Co.)
Solvent: tetrahydrofuran (THF)
Flow rate: 0.3 ml/min
Column temperature: 40°C
Specimen: 1.5 mg/1.0 ml THF
Standard material: polystyrene

In the present description, a complex viscosity graph for each frequency was measured using advanced rheometric expansion system (ARES, TA instruments Co.). The specimen was measured at 180°C using parallel plates with a diameter of 25.0 mm with a gap of 1.0 mm and an angular frequency sweep mode, for strain 5% and a frequency from 0.1 rad/s to 500 rad/s. van Gurp-Plamen plot (vGP) was plotted with values confirmed through the frequency sweep mode measurement. In addition, the slope of the above graph was calculated as the average value of all X and Y values by replacing each complex viscosity for the entire set frequency with log.

### Branched Polylactic Acid Polymer

The present invention provides a branched polylactic acid polymer with improved melt intensity and rheological properties through the modification of a linear structure.

The branched polylactic acid polymer according to an embodiment of the present invention is characterized in including a derived unit from a polylactic acid polymer, and having an average number of long chain branches per molecule of 3 to 10 and a mass flow rate measured under 190°C and 2.16 kg load based on ASTM D1238 conditions of 1 g/10 min to 20 g/10 min.

Here, the "per molecule" means each polymer chain (i.e., per chain) constituting the branched polylactic acid polymer.

Polylactic acid polymer is a biodegradable, eco-friendly material that is used as a material for various films, fibers, and other molded products, but has a linear structure and is brittle and has low rheological properties including melt strength, and there are significant limitations in a blow molding process and an injection molding process. In addition, it is unsuitable for the use requiring high thermal and mechanical properties due to low crystallinity. In order to solve the problems, a technique has been attempted to blend or copolymerize polybutylene succinate and polybutylene adipate terephthalate, which are biodegradable resins similar to PLA, with resins such as PP and PE, which have high heat resistance, or a technique has been attempted to modify the linear structure of polylactic acid polymer and its properties by introducing long chain branching (LCB) into PLA using a chain extender or a branching agent, but there are problems with compatibility between the resins and insignificant effects achieved.

In addition, a polylactide resin in which long chain branches are introduced by the reaction of polylactic acid polymer with an acrylate polymer or copolymer containing an epoxide group has been suggested, but there is a problem in that the viscosity of the polylactide resin prepared by the reaction with the acrylate polymer or copolymer increases significantly, causing difficulties for control in a molding process, which narrows the industrial application field of the polylactide resin to a very limited extent. However, the branched polylactic acid polymer according to the present invention is prepared by introducing a long chain molecule to a polylactic acid polymer by applying an epoxy group-containing acrylate copolymer prepared by polymerizing a first alkyl (meth)acrylate monomer, a glycidyl (meth)acrylate monomer, and a second alkyl (meth)acrylate monomer which is different from the first alkyl (meth)acrylate monomer, as a branching agent, and linearity may be improved without the problem of rapid increase of a viscosity, resulting in improved melt strength and rheological properties due to the high reactivity of the epoxide groups in the branching agent and excellent miscibility with the polylactide resin, and accordingly, it can be applied to a very wide range of uses.

Hereinafter, the branched polylactic acid polymer according to the present invention will be explained in more detail by dividing into each component contained therein.

### Derived Unit from Polylactic Acid Polymer

In the present invention, the derived unit from the polylactic acid polymer is derived from a polylactic acid polymer which is a starting material constituting the skeleton of a branched polylactic acid polymer, and may mean, for example, a unit derived from a polylactic acid polymer in a branched polylactic acid polymer formed by the reaction of the polylactic acid polymer with an epoxy group-containing acrylate copolymer by a preparation method explained later.

The polylactic acid polymer is a thermoplastic polyester obtained by polymerizing lactide or lactic acid and includes a polymer having a repeating unit of a-[OC(O)CH(CH₃)]- structure.

In addition, the polylactic acid polymer may have a repeating unit derived from alkylene oxide, or a repeating unit derived from other monomers which are copolymerizable with lactide, and in this case, the repeating unit derived from alkylene oxide and the repeating unit derived from other monomers which are copolymerizable with lactide may be present in block and/or random arrangement. In addition, if the polylactic acid polymer includes the repeating unit derived from alkylene oxide or the repeating unit derived from other monomers which are copolymerizable with lactide, 10 wt% or less, particularly, 5 wt% or less may be included.

In addition, the polylactic acid polymer may have a relative weight average molecular weight of 30,000 g/mol to 250,000 g/mol, and a molecular weight distribution of 1.5 to 2.0, when measured by gel permeation chromatography using a polystyrene standard.

In another embodiment, the polylactic acid polymer may select and use a polymer having an appropriate relative weight average molecular weight within the above range depending on the need for desired effects and uses. For example, a polylactic acid polymer having a low molecular weight, which has a relative weight average molecular weight of 30,000 g/mol to 120,000 g/mol, or a polylactic acid polymer having a high molecular weight, which has a relative weight average molecular weight of 120,000 g/mol to 250,000 g/mol may be selected and used.

### Derived Unit from Epoxy Group-containing Acrylate Copolymer

The branched polylactic acid polymer according to the present invention is characterized in further including a derived unit from an epoxy group-containing acrylate copolymer, wherein the epoxy group-containing acrylate copolymer includes 30 wt% to 50 wt% of a repeating unit derived from a first alkyl (meth)acrylate monomer, 30 wt% to 60 wt% of a repeating unit derived from a glycidyl (meth)acrylate monomer, and 10 wt% to 20 wt% of a repeating unit derived from a second alkyl (meth)acrylate monomer, and the first alkyl (meth)acrylate monomer and the second alkyl (meth)acrylate monomer are different from each other.

The derived unit from the epoxy group-containing acrylate copolymer according to an embodiment of the present invention is derived from an epoxy group-containing acrylate copolymer, and may mean, for example, a unit derived from an epoxy group-containing acrylate copolymer in a branched polylactic acid polymer formed by the reaction of an epoxy group-containing acrylate copolymer with a polylactic acid polymer by a preparation method described below.

The epoxy group-containing acrylate copolymer includes the repeating unit derived from the first alkyl (meth)acrylate monomer, the repeating unit derived from the glycidyl (meth)acrylate monomer, and the repeating unit derived from the second alkyl (meth)acrylate monomer, and the first alkyl (meth)acrylate monomer and the second alkyl (meth)acrylate monomer may be different from each other.

Particularly, the epoxy group-containing acrylate copolymer may include 30 wt% to 50 wt% of the repeating unit derived from the first alkyl (meth)acrylate monomer, 30 wt% to 60 wt% of the repeating unit derived from the glycidyl (meth)acrylate monomer, and 10 wt% to 20 wt% of the repeating unit derived from the second alkyl (meth)acrylate monomer, and the first alkyl (meth)acrylate monomer and the second alkyl (meth)acrylate monomer may be different from each other.

In the above, the first alkyl (meth)acrylate monomer and the second alkyl (meth)acrylate monomer may be each independently at least one selected from the group consisting of methyl (meth)acrylate, butyl (meth)acrylate and 2-ethylhexyl acrylate, and particularly, the first alkyl (meth)acrylate monomer may be methyl methacrylate, and the second alkyl (meth)acrylate monomer may be butyl methacrylate.

In addition, the glycidyl (meth)acrylate monomer may be a glycidyl methacrylate monomer or a glycidyl acrylate monomer.

### Branched Polylactic Acid Polymer

The branched polylactic acid polymer according to an embodiment of the present invention may include 0.5 parts by weight to 1.0 part by weight of the derived unit from the epoxy group-containing acrylate copolymer on the basis of 100 parts by weight of the derived unit from the polylactic acid polymer, and in this case, the branched polylactic acid polymer including thereof may have evenly branched properties without the problem of gel formation due to branching.

In another embodiment, the branched polylactic acid polymer may have an average number of long chain branches per molecule of 3 to 10, and a mass flow rate measured under 190°C and 2.16 kg load based on ASTM D1238 conditions of 1 g/10 min to 20 g/10 min.

In another embodiment, the branched polylactic acid polymer may have an average number of long chain branches per molecule of 5 to 10, or 7 to 10, and at the same time, a mass flow rate measured under 190°C and 2.16 kg load based on ASTM D1238 conditions of 1 g/10 min to 20 g/10 min, 1 g/10 min to 7 g/10 min, or 7 g/10 min to 20 g/10 min.

In another embodiment, the branched polylactic acid polymer may satisfy the average number of long chain branches and the mass flow rate in the ranges according to the molecular weight properties of the polylactic acid polymer constituting the derived unit from the polylactic acid polymer, but may show different mass flow rate properties. For example, in case of including the derived unit from a polylactic acid polymer derived from a polylactic acid polymer with a low molecular weight, the mass flow rate may be 7 g/10 min to 20 g/10 min, and in case of including the derived unit from a polylactic acid polymer derived from a polylactic acid polymer with a high molecular weight, the mass flow rate may be 1 g/10 min to 7 g/10 min.

In addition, the branched polylactic acid polymer may have an absolute weight average molecular weight of 100,000 g/mol to 1,500,000 g/mol and a poly dispersity index of 2.0 to 3.5, when measured by multi-angle light scattering-gel permeation chromatography.

In another embodiment, the absolute weight average molecular weight properties measured by multi-angle light scattering-gel permeation chromatography may be different according to the molecular weight properties of the polylactic acid polymer constituting the derived unit from the polylactic acid polymer. For example, in case of including the derived unit from a polylactic acid polymer derived from a polylactic acid polymer with a low molecular weight, the absolute weight average molecular weight may be 100,000 g/mol to 500,000 g/mol and the poly dispersity index may be 2.0 to 3.5, and in case of including the derived unit from a polylactic acid polymer derived from a polylactic acid polymer with a high molecular weight, the absolute weight average molecular weight may be 500,000 g/mol to 1,500,000 g/mol and the poly dispersity index may be 2.0 to 3.5.

In another embodiment, the branched polylactic acid polymer may have two peak tops on a differential molecular weight distribution graph obtained from measurement by gel permeation chromatography using a polystyrene standard, where a horizontal axis is a logarithmic molecular weight [log(M)], and a vertical axis is dw/dlog(M), which is the differential of a concentration fraction w by the logarithmic molecular weight, a first peak top (Pt₁) may be 0.8 to 1.2, and a second peak top (Pt₂) may be 0.1 to 0.6.

In another embodiment, the branched polylactic acid polymer may have the first peak top (Pt₁) of 1.0 to 1.2, and the second peak top (Pt₂) of 0.2 to 0.6.

In addition, the branched polylactic acid polymer may have two peak tops on a differential molecular weight distribution graph obtained from measurement by gel permeation chromatography using a polystyrene standard, where a horizontal axis is a logarithmic molecular weight [log(M)], and a vertical axis is dw/dlog(M), which is the differential of a concentration fraction w by the logarithmic molecular weight, a first peak top (Pt₁) may be present in 4.5≤log(M)≤ 5.8, and a second peak top (Pt₂) may be present in 5.8<log(M) ≤6.5.

In another embodiment, the branched polylactic acid polymer may have a slope of -0.1 to -0.6 or -0.3 to -0.6 on a graph of a complex viscosity (Pa.s) in accordance with an angular frequency (rad/s) at 180°C. Here, the slope was calculated as the average of all X and Y values by substituting log for each complex viscosity for the entire frequency.

### Method for Preparing Branched Polylactic Acid Polymer

The present invention provides a method for preparing the branched polylactic acid polymer.

The method for preparing the branched polylactic acid polymer according to an embodiment of the present invention is characterized in including a step of mixing a polylactic acid polymer and an epoxy group-containing acrylate copolymer, while heating in a temperature range of 180°C to 200°C, wherein the epoxy group-containing acrylate copolymer is prepared by polymerizing 30 wt% to 50 wt% of a repeating unit derived from a first alkyl (meth)acrylate monomer, 30 wt% to 60 wt% of a repeating unit derived from a glycidyl (meth)acrylate monomer, and 10 wt% to 20 wt% of a repeating unit derived from a second alkyl (meth)acrylate monomer, in the presence of an emulsifier in a solvent, and the first alkyl (meth)acrylate monomer and the second alkyl (meth)acrylate monomer are different from each other.

Particular explanation on the polylactic acid polymer starting material is the same as described above.

In addition, the polylactic acid polymer may be purchased and used as commonly known in the art, or prepared and used. If prepared and used, the polylactic acid polymer may be prepared by a common polymerization method in the art using lactide or lactic acid as a monomer.

In addition, the epoxy group-containing acrylate copolymer may be prepared by polymerizing a first alkyl (meth)acrylate monomer, a glycidyl (meth)acrylate monomer, and a second alkyl (meth)acrylate monomer which is different from the first alkyl (meth)acrylate monomer, in the presence of an emulsifier in a solvent, and here, particular materials of the first alkyl (meth)acrylate monomer, the glycidyl (meth)acrylate monomer and the second alkyl (meth)acrylate monomer are the same as described above.

Particularly, the epoxy group-containing acrylate copolymer may be prepared by polymerizing 30 wt% to 50 wt% of the first alkyl (meth)acrylate monomer, 30 wt% to 60 wt% of the glycidyl (meth)acrylate monomer, and 10 wt% to 20 wt% of the second alkyl (meth)acrylate monomer which is different from the first (meth)acrylate monomer, in the presence of an emulsifier in a solvent, and in this case, the polymerization may be performed at 70°C to 80°C for 3 to 10 hours.

In addition, the polymerization may be performed in an aqueous solvent, and in this case, the solvent is distilled water.

The emulsifier may be one or more selected from the group consisting of anionic emulsifiers, cationic emulsifiers and nonionic emulsifiers, for example, one or more selected from the group consisting of alkylaryl sulfonate, alkali methyl alkyl sulfate, soap of fatty acid, alkali salt of oleic acid, alkali salt of rosin acid, alkali salt of lauric acid, sodium diethylhexyl phosphate, phosphonated polyoxyethylene alcohol and phosphonated polyoxyethylene phenol. In addition, the emulsifier may be used in 5 parts by weight or less, particularly, 3.0 parts by weight or less, or 0.5 parts by weight to 2.5 parts by weight on the basis of 100 parts by weight of the total monomer.

In addition, the polymerization may be performed by further using a polymerization initiator, and in this case, the initiator may use an inorganic peroxide or an organic peroxide, for example, water-soluble polymerization initiators such as potassium persulfate, sodium persulfate and ammonium persulfate, and oil-soluble polymerization initiators such as cumene hydroperoxide and benzoyl peroxide.

In addition, an activating agent may be further used together with the polymerization initiator to promote the initiation of the reaction of peroxide, and such activating agent may use one or more selected from the group consisting of sodium formaldehyde sulfoxylate, sodium ethylenediaminetetraacetate, ferrous sulfate and dextrose.

In addition, the polymerization initiator may be used in 0.1 parts by weight to 10 parts by weight, particularly, 0.1 parts by weight to 5 parts by weight on the basis of 100 parts by weight of the total monomer.

In another embodiment, a chain transfer agent may be further used to promote the efficiency of the polymerization reaction, and as the chain transfer agent, a linear or branched alkylthiol compound of 5 to 20 carbon atoms may be used, for example, one or more selected from the group consisting of hexanethiol, cyclohexanethiol, adamantanethiol, heptanethiol, octanethiol, nonanethiol, decanethiol, undecanethiol, dodecanethiol, hexadecanethiol and octadecanethiol may be used.

In addition, the chain transfer agent may be used in 0.1 parts by weight to 10 parts by weight, or 0.1 parts by weight to 5 parts by weight on the basis of 100 parts by weight of the monomer.

In addition, the epoxy group-containing acrylate copolymer may be prepared by further performing one or more steps selected from washing, dehydrating and drying after polymerization. In this case, the washing, dehydrating and drying may be performed by commonly known methods in the art.

### Examples

Hereinafter, the present invention will be explained in more detail referring to the Examples. However, the Examples below are for illustrating the present invention, and the scope of the present invention is not limited thereto.

### Preparation Example

To a reactor, 200 parts by weight of distilled water and 0.5 parts by weight of sodium dodecylbenzene sulfonate (SDBS) were injected and stirred while elevating the temperature to 70°C. 0.2 parts by weight of potassium persulfate (KPS) was added thereto, followed by stirring for 20 minutes, and a mixture of 45 parts by weight of methyl methacrylate, 40 parts by weight of glycidyl methacrylate, 15 parts by weight of butyl methacrylate and 0.7 parts by weight of 1-octanethiol was continuously added to the reactor over 4 hours. After finishing the addition, the temperature was reduced to 25°C while stirring for 30 minutes to prepare an emulsion polymerized latex. The emulsion polymerized latex thus prepared was coagulated using an aqueous potassium acetate solution, heated by elevating the temperature to 90°C, dehydrated, and dried at 60°C for 16 hours to prepare an epoxy group-containing acrylate copolymer.

### Comparative Preparation Example

To a reactor, 200 parts by weight of distilled water and 0.5 parts by weight of sodium dodecylbenzene sulfonate (SDBS) were injected and stirred while elevating the temperature to 70°C. 0.2 parts by weight of potassium persulfate (KPS) was added thereto, followed by stirring for 20 minutes, and a mixture of 65 parts by weight of methyl methacrylate, 20 parts by weight of glycidyl methacrylate, 15 parts by weight of butyl methacrylate and 0.7 parts by weight of 1-octanethiol was continuously added to the reactor over 4 hours. After finishing the addition, the temperature was reduced to 25°C while stirring for 30 minutes to prepare an emulsion polymerized latex. The emulsion polymerized latex thus prepared was coagulated using an aqueous potassium acetate solution, heated by elevating the temperature to 90°C, dehydrated, and dried at 60°C for 16 hours to prepare an epoxy group-containing acrylate copolymer.

### Example 1

A polylactic acid polymer (4032D, Mw=214,900 g/mol, Natureworks Co.) was prepared by drying at 80°C for 24 hours.

With 100 parts by weight of the polylactic acid polymer thus prepared, 0.5 parts by weight of the copolymer prepared in the Preparation Example was mixed to prepare a mixture, and blended using a mixer (Lab batch mixer) in 60 rpm at 180°C for 10 minutes to prepare a branched polylactic acid polymer.

### Example 2

A branched polylactic acid polymer was prepared by performing the same method as in Example 1 except for using 1.0 part by weight of the copolymer prepared in the Preparation Example, in Example 1.

### Example 3

A branched polylactic acid polymer was prepared by performing the same method as in Example 1 except for using 0.75 parts by weight of the copolymer prepared in the Preparation Example, in Example 1.

### Comparative Example 1

A polylactic acid polymer (4032D, Natureworks Co.) was dried at 80°C for 24 hours and used as comparative data as an unbranched polylactic acid polymer.

### Comparative Example 2

A branched polylactic acid polymer was prepared by performing the same method as in Example 1 except for using Joncrill^{®} 4368 acrylic copolymer (Mn=2,000 g/mol, average of 7 epoxy groups per molecule) instead of the copolymer prepared in the Preparation Example, in Example 1.

### Comparative Example 3

A branched polylactic acid polymer was prepared by performing the same method as in Example 1 except for using the copolymer prepared in the Comparative Preparation Example instead of the copolymer prepared in the Preparation Example, in Example 1.

### Experimental Example 1

The molecular weight properties and rheological properties of each branched or unbranched polylactic acid polymer prepared in the Examples and Comparative Examples were compared and analyzed. The results are shown in Table 1 below and FIG. 1 to FIG. 6.

### (1) Molecular Weight Properties

Relative molecular weight properties analyzed by gel permeation chromatography (GPC) using polystyrene as a standard material and relative molecular weight properties analyzed by multi-angle light scattering-gel permeation chromatography (MALS-GPC) were compared.

### 1) Relative Molecular Weight Properties

For the relative molecular weight properties, a weight average molecular weight, a number average molecular weight and molecular weight distribution were confirmed through a molecular distribution graph obtained by measuring under the conditions below using gel permeation chromatography (GPC) provided with a differential refractive index detector (RI).

In addition, peak top characteristics were confirmed by obtaining a differential molecular weight distribution graph (see FIG. 1) which is the differential of a concentration fraction w by a logarithmic molecular weight, where the horizontal axis is a logarithmic molecular weight [log(M)], and the vertical axis is dw/dlog(M).
Column: two columns of PLgel Olexis (Polymer Laboratories Co.)
Solvent: tetrahydrofuran (THF)
Flow rate: 0.3 ml/min
Column temperature: 40°C
Specimen: 1.5 mg/1.0 ml THF
Standard material: polystyrene

### 2) Multi-angle Light Scattering-Gel Permeation Chromatography

Analysis was conducted by using a Viscotek VE2001 GPC/SEC system provided with a Viscotek TDA 305 triple detector array module (light scattering, viscometer, and refractive index detector) under the conditions below, and all result data were calculated using OmniSEC version 4.7 software.
Column: two columns of Plgel mixed-B (Agilent Co.)
Solvent: tetrahydrofuran (THF)
Flow rate: 1.0 ml/min
Column temperature: 40°C
Specimen: 3.0 mg/1.0 ml THF
Standard material: polystyrene

### (2) Rheological Properties

Rheological properties were compared by measuring complex viscosity, storage modulus, and vGP plot (van Gurp-Palmen) using a viscometer.

Particularly, measurement was conducted using advanced rheometric expansion system (ARES, TA instruments Co.). The specimen was measured at 180°C using parallel plates with a diameter of 25.0 mm so that the gap was 1.0 mm, and measurement was conducted with an angular frequency sweep mode, for strain 5% and a frequency from 0.1 rad/s to 500 rad/s. vGP (van Gurp-Plamen plot) was plotted with values confirmed through frequency sweep mode measurement (see FIG. 6). In addition, the slope of the complex viscosity graph was calculated as the average value of all X and Y values by replacing each complex viscosity for the entire set frequency with log.

### (3) Mass Flow Rate (MFR)

Measurement was conducted using MI-4 (Gottfer Co.) at 190°C and 2.16 kg load according to ASTM D1238 conditions.

**[Table 1]**

| Division | | Example | | | Comparative Example | | |
|---|---|---|---|---|---|---|---|
| | | 1 | 2 | 3 | 1 | 2 | 3 |
| Branching Agent Used (parts by weight) | | 0.5 | 1.0 | 0.75 | - | 0.5 | 0.5 |
| MFR (g/10 min) | | 3.31 | 1.0 | 2.61 | 6.86 | 0 | 5.81 |
| Rheolo gical Proper ties | Complex Viscosity (at 0.1 rad/s, Pa.S) | 17810 | 62253 | 25313 | 4915 | 32817 | 11363 |
| | Slope | - 0.360 | - 0.491 | - 0.404 | - 0.210 | - 0.438 | - 0.285 |
| GPC | Mw (x10³) | 347.7 | 458.7 | 369.4 | 214.9 | 394.4 | 281.5 |
| | Mz (x10³) | 858.4 | 1,025 .9 | 927.2 | 325.0 | 856.1 | 424.1 3 |
| | Pt₁ | 1.12 | 1.00 | 1.09 | 1.3 | 0.93 | 1.21 |
| | Pt₂ | 0.31 | 0.50 | 0.34 | - | 0.50 | 0.15 |
| | PDI | 2.72 | 2.89 | 2.75 | 1.84 | 2.93 | 2.27 |
| MALS-GPC | Mw (x10³) | 1,018 | 1,440 | 978 | 447.8 | 967.6 | 732.9 |
| | Mz (x10³) | 4,243 | 4,831 | 4,139 | 523.2 | 2,452 | 2,383 |
| | PDI | 2.68 | 2.84 | 2.83 | 1.15 | 2.29 | 1.92 |
| | Bn | 7.28 | 9.71 | 8.28 | 2.00 | 5.59 | 2.50 |
| | Slope | 0.27 | -0.59 | 0.24 | 0.84 | 0.28 | 0.56 |

In Table 1 above, Bn represents the average number of long chain branches per molecule, and the slope means Mark-Houwink slope, with lower values indicating higher degree of branching.

Through Table 1, it was confirmed that the branched polylactic acid polymers of Example 1 to Example 3 satisfied an average number of long chain branches per molecule of 3 to 10 as suggested in the present invention, and at the same time, an MFR of 1 g/10 min to 20 g/10 min. In addition, it was confirmed that Example 1 to Example 3 were prepared using polylactic acid polymers having a high molecular weight and had an average number of long chain branches per molecule of 3 to 10, and at the same time, an MFR of 1 g/10 min to 7 g/10 min.

On the contrary, the unbranched or branched polylactic acid polymers of Comparative Examples 1 to 3 did not satisfy an average number of long chain branches per molecule of 3 to 10 or did not satisfy the MFR of 1 g/10 min to 20 g/10 min.

### Experimental Example 2

Blown films were manufactured using the branched or unbranched polylactic acid polymers prepared in the Examples and Comparative Examples to confirm blown film properties, and the results are shown in Table 2 below.

The blown film was manufactured by molding each of the above polymers using a single-screw extruder (Collin Lab & Pilot Solutions, Blown Film Line E Entranc, Blown Film M/C, 19 pi, L/D=25) at an extrusion temperature of 210°C-220°C to a thickness of 0.08 mm. In this case, the film was manufactured with a blown-up ratio of about 1.8.

The processability of the blown film was compared through the pressure (bar) value measured during discharging from a die. The higher the viscosity of the processed extruded pellet or the lower the degree of branching, the higher the pressure value. It means that the lower the pressure value, the better the processability.

**[Table 2]**

| Division | Example | | | Comparative Example | | |
|---|---|---|---|---|---|---|
| | 1 | 2 | 3 | 1 | 2 | 3 |
| Processability (bar) | 17 | 19 | 18 | 21 | 27 | 20 |

Through Table 2, it was confirmed that the branched polylactic acid polymers of Example 1 to Example 3, which have an average number of long chain branches per molecule of 3 to 10 and an MFR of 1 g/10 min to 20 g/10 min, had better blown film processability compared to Comparative Example 1 to Comparative Example 3.

Particularly, it was confirmed that in the case of Comparative Example 1, in which both the average number of long chain branches per molecule and the MFR were not satisfied, the blown film processability was significantly reduced to about 81%-90% compared to Example 1 to Example 3, in the case of Comparative Example 2, in which the above-conditions of the average number of long chain branches per molecule was satisfied but the MFR was low, the blown film processability was significantly inferior to about 63%-70% compared to Example 1 to Example 3, and in the case of Comparative Example 3, in which the MFR was satisfied but the above-conditions of the average number of long chain branches per molecule was not satisfied, the blown film processability was reduced to about 85%-95% compared to Example 1 to Example 3.

## Claims

1. A branched polylactic acid polymer comprising a derived unit from a polylactic acid polymer,
wherein
an average number of long chain branches per molecule is 3 to 10, and
a mass flow rate measured under 190°C and 2.16 kg load based on ASTM D1238 conditions is 1 g/10 min to 20 g/10 min.

2. The branched polylactic acid polymer according to claim 1, wherein
a derived unit from an epoxy group-containing acrylate copolymer is further comprised, and
the epoxy group-containing acrylate copolymer comprises 30 wt% to 50 wt% of a repeating unit derived from a first alkyl (meth)acrylate monomer, 30 wt% to 60 wt% of a repeating unit derived from a glycidyl (meth)acrylate monomer, and 10 wt% to 20 wt% of a repeating unit derived from a second alkyl (meth)acrylate monomer, where the first alkyl (meth)acrylate monomer and the second alkyl (meth)acrylate monomer are different from each other.

3. The branched polylactic acid polymer according to claim 2, wherein the derived unit from an epoxy group-containing acrylate copolymer is comprised in 0.5 parts by weight to 1.0 part by weight on the basis of 100 parts by weight of the derived unit from a polylactic acid polymer.

4. The branched polylactic acid polymer according to claim 2, wherein the epoxy group-containing acrylate copolymer has the number of epoxy groups per molecule of 30 to 80.

5. The branched polylactic acid polymer according to claim 2, wherein the first alkyl (meth)acrylate monomer and the second alkyl (meth)acrylate monomer are each independently at least one or more selected from the group consisting of methyl (meth)acrylate, butyl acrylate and 2-(ethylhexyl)acrylate, and
the first alkyl (meth)acrylate monomer and the second alkyl (meth)acrylate monomer are different from each other.

6. The branched polylactic acid polymer according to claim **1,** wherein the polylactic acid polymer has a weight average molecular weight measured by gel permeation chromatography using a polystyrene standard of 30,000 g/mol to 250,000 g/mol.

7. The branched polylactic acid polymer according to claim 1, wherein the branched polylactic acid polymer has an absolute weight average molecular weight of 100,000 g/mol to 1,500,000 g/mol, and a poly dispersity index of 2.0 to 3.5, when measured by multi-angle light scattering-gel permeation chromatography.

8. The branched polylactic acid polymer according to claim 1, wherein
the branched polylactic acid polymer has two peak tops on a differential molecular weight distribution graph obtained from measurement by gel permeation chromatography using a polystyrene standard, where a horizontal axis is a logarithmic molecular weight [log(M)], and a vertical axis is dw/dlog(M), which is the differential of a concentration fraction w by the logarithmic molecular weight,
a first peak top (Pt₁) is 0.8 to 1.2, and
a second peak top (Pt₂) is 0.1 to 0.6.

9. The branched polylactic acid polymer according to claim 1, wherein
the branched polylactic acid polymer has two peak tops on a differential molecular weight distribution graph obtained from measurement by gel permeation chromatography using a polystyrene standard, where a horizontal axis is a logarithmic molecular weight [log(M)], and a vertical axis is dw/dlog(M), which is the differential of a concentration fraction w by the logarithmic molecular weight,
a first peak top (Pt₁) is present in 4.5≤log(M)≤5.8, and
a second peak top (Pt₂) is present in 5.8≤log(M)≤6.5.

10. The branched polylactic acid polymer according to claim 1, wherein a slope on a graph of a complex viscosity (Pa.s) in accordance with an angular frequency (rad/s) is -0.1 to -0.6 at 180°C.

11. A method for preparing a branched polylactic acid polymer, the method comprising:
a step of mixing a polylactic acid polymer and an epoxy group-containing acrylate copolymer, while heating in a temperature range of 180°C to 200°C,
wherein the epoxy group-containing acrylate copolymer is prepared by polymerizing 30 wt% to 50 wt% of a repeating unit derived from a first alkyl (meth)acrylate monomer, 30 wt% to 60 wt% of a repeating unit derived from a glycidyl (meth)acrylate monomer, and 10 wt% to 20 wt% of a repeating unit derived from a second alkyl (meth)acrylate monomer, in the presence of an emulsifier in a solvent, and
the first alkyl (meth)acrylate monomer and the second alkyl (meth)acrylate monomer are different from each other.

12. The method for preparing a branched polylactic acid polymer according to claim 11, wherein the epoxy group-containing acrylate copolymer is used in 0.5 parts by weight to 1.0 part by weight on the basis of 100 parts by weight of the polylactic acid polymer.

13. The method for preparing a branched polylactic acid polymer according to claim 11, wherein the epoxy group-containing acrylate copolymer has the number of epoxy groups per molecule of 30 to 80.
